# EUROPÄISCHE PATENTSCHRIFT

(11) **EP 2 428 411 B1**
(45) Veröffentlichungstag und Bekanntmachung des Hinweises auf die Patenterteilung: **22.08.2012**
(21) Anmeldenummer: 10013875.9
(22) Anmeldetag: 22.10.2010
(51) Int. Cl.: B60R 21/12

(54) **Fahrerschutzkabine in einem Fahrzeug des öffentlichen Personentransportverkehrs, zum Beispiel einem Bus**
Driver protection cabin in a public transport vehicle, for example a bus
Cabine de protection du conducteur dans un véhicule du transport routier public de personnes, par exemple un bus

(30) Priorität: 14.09.2010 DE 102010045248; 23.09.2010 EP 10010270; 24.09.2010 DE 102010046465
(43) Veröffentlichungstag der Anmeldung: 14.03.2012
(73) Patentinhaber: Hübner GmbH, 34123 Kassel (DE)
(72) Erfinder: HÜBSCH, Daniel, 34119 Kassel (DE); SPRENGER, Thorsten, 34253 Lohfelden (DE); WERNER, Martin, 37217 Witzenhausen (DE); WOLF, Heiko, 34253 Lohfelden (DE)
(74) Vertreter: Walther, Walther & Hinz GbR

(56) Entgegenhaltungen:
- AU-A- 3 399 893
- US-A- 4 227 735

## Beschreibung

Die Erfindung betrifft eine Fahrerschutzkabine in einem Fahrzeug des öffentlichen Personentransportverkehrs, zum Beispiel einem Bus, wobei die Kabine auf der dem Eingang des Fahrzeugs zugewandten Seite eine Tür aufweist, wobei die Tür versetzt zur Tür mindestens ein Schiebeelement aufweist, das durch einen Teleskopauszug mit der Tür in Verbindung steht. Fahrzeuge des öffentlichen Transportverkehrs, wie zum Beispiel Straßenbahnen und Busse werden durch Fahrer gesteuert. Hinter dem Fahrer befindet sich im Allgemeinen eine Scheibe, um den Fahrer von hinten gegenüber dem Passagierraum abzuschirmen. Seitlich zum Fahrersitz befindet sich üblicherweise eine Schwenktür, die etwa kniehoch ist. Darüber hinaus befindet sich auch noch das Kassensystem seitlich zum Fahrer, dem Türeinstieg gegenüberliegend.

In der Vergangenheit und dies war auch in der Presse des Öfteren zu lesen, wurden Fahrer von Fahrzeugen des öffentlichen Personennahverkehrs, und hier insbesondere auch von Bussen, Opfer von Angriffen durch Passagiere. Die Fahrer wurden angespuckt oder sogar tätlich angegriffen. Die Gefahr von Angriffen besteht insbesondere in den späten Abend- oder Nachtstunden, insbesondere wenn die Passagiere zum Teil alkoholisiert das Fahrzeug betreten.

Gegenstand der Erfindung ist nunmehr eine Fahrerschutzkabine in einem solchen Fahrzeug des öffentlichen Personentransportverkehrs, um den Fahrer gegenüber Angriffen von Passagieren zu schützen. Insbesondere soll der Schutz des Fahrers ermöglicht werden, aber dennoch die Möglichkeit zur Kommunikation mit den Passagieren beibehalten werden, beispielsweise durch die Ausgabe von Fahrkarten , Fahrkarten zu kontrollieren und auch den Passagieren gegebenenfalls Informationen zu vermitteln.

In diesem Zusammenhang ist aus der AU-A-33998/93 eine Fahrerschutzkabine entsprechned dem Oberbergrift des Anspruchs1 bekannt, z.B. in einem Bus, wobei die Kabine auf der dem Eingang des Fahrzeugs zugewandten Seite eine Tür aufweist, wobei die Tür ein Schiebeelement aufweist, das durch einen Teleskopauszug mit der Tür in Verbindung steht. Hierbei ist die Tür Teil der Fahrerschutzkabine, wobei die Tür ein Schiebeelement aufweist, das durch einen Teleskopauszug mit der Tür als feststehendem Element verbunden ist. Zum Verfahren des Schiebelements ist ein Pneumatikzylinder vorgesehen.

Bei mehreren Schiebeelementen soll aufgabengemäß die Möglichkeit bestehen die Öffnung zum Fahrer auch nur teilweise blockieren zu können; d. h. die Schiebeelemente sollen in jeder Stellung also nicht nur in den Endstellungen blockierbar sein, sondern auch in beliebigen Zwischenstellungen.

Zur Lösung der Aufgabe dienen die Merkmale des Kennzeichens des Anspruchs 1 in Verbindung mit den Merkmalen des Oberbegriffs. Hierbei ist vorgesehen, dass die Kabine auf der dem Eingang des Fahrzeugs zugewandten Seite eine Tür aufweist, wobei die Tür versetzt zueinander mehrere Schiebeelemente aufweist, die durch den Teleskopauszug miteinander in Verbindung stehen. Die Kabine wird hierbei gebildet durch die Außenkontur des Busses und das hinter dem Fahrer befindliche Schutzsegment z. B. die bereits zuvor erwähnte Scheibe. Durch die Verwendung einer aus einzelnen Schiebeelementen bestehenden Tür, wobei die Schiebeelemente durch einen Teleskopauszug miteinander in Verbindung stehen, insbesondere wenn die einzelnen Schiebeelemente als Fensterelemente ausgebildet sind, besteht die Möglichkeit für den Fahrer je nach Bedarf und Gefährdungssituation die Tür entweder komplett geschlossen zu halten oder aber lediglich ein Schiebeelement, auch partiell zurückzuschieben, sodass eine Kommunikation mit dem Passagier möglich bleibt. Hieraus wird unmittelbar deutlich, dass durch den Aufbau einer Tür mit einzelnen Schiebeelementen, die durch einen Teleskopauszug horizontal verschieblich sind, der Fahrer weitgehend vor Angriffen von Passagieren geschützt ist, ohne die Möglichkeit der Kommunikation nachhaltig einzuschränken.

Durch die Verwendung einzelner Schiebelemente, die durch den Teleskopauszug miteinander in Verbindung stehen, besteht die Möglichkeit, die Tür segmentweise zu öffnen. Hierzu weist der Teleskopauszug mehrere Teleskopglieder auf. Die einzelnen Teleskopglieder sind untereinander zwangsgekoppelt. Die Zwangskopplung der Teleskopglieder untereinander bedeutet, dass bei Verschiebung eines Teleskopgliedes die anderen Teleskopglieder sich entsprechend verschieben. Dies bedeutet auch, dass bei Blockierung eines der Teleskopglieder der gesamte Teleskopauszug blockiert ist.

Vorteilhafte Merkmale und Ausgestaltungen der Erfindung ergeben sich aus den Unteransprüchen.

Im Einzelnen ist in diesem Zusammenhang vorgesehen, dass die Zwangskopplung durch mehrere die einzelnen Teleskopglieder verbindende Riemen-, Ketten- oder Seiltriebe erfolgt. Es reicht demzufolge aus, wenn beispielsweise einer der Mehrzahl von z. B. Riementrieben arretiert wird, um den Teleskopauszug insgesamt zu blockieren. Das bedeutet ganz praktisch, dass in jeder Stellung, selbst wenn ein Schiebeelement des Teleskopauszugs nur um einen ganz geringen Betrag verschoben worden ist, dann bei Blockierung eines Riementriebes durch den Fahrer, von außen nicht mehr die Möglichkeit besteht, die Schiebeelemente seitlich zu verschieben.

So ist vorgesehen, dass die Schiebeelemente aus der Ebene versetzt zueinander durch den Teleskopauszug miteinander in Verbindung stehen. Hieraus wird deutlich, dass die einzelnen Schiebeelemente, ähnlich einer Schiebetür, im zusammengeschobenen Zustand hinter ein feststehendes Element der Fahrerschutzkabine parallel zueinanderstehend zusammengeschoben werden können.

Der Teleskopauszug, der insbesondere Gegenstand der Erfindung ist, zeichnet sich nach einem weiteren Merkmal der Erfindung durch mindestens zwei Rollenschienen in Form von Linearführungen aus, die durch mehrere Schlitten miteinander in Verbindung stehen, wobei die Schlitten relativ zueinander verschieblich untereinander verbunden sind. Im Einzelnen sind hierbei drei Schlitten vorgesehen, die durch Linear- oder Rollenführungen relativ zueinander verschieblich miteinander in Verbindung stehen. Eine besonders vorteilhafte Ausführungsform zeichnet sich dadurch aus, dass der Teleskopauszug eine erste Rollenschiene umfasst, die mit einem ersten Schlitten verschieblich in Verbindung steht, wobei der erste Schlitten durch eine Linearführung mit einem zweiten Schlitten verschieblich gekoppelt ist, wobei der zweite Schlitten durch eine Linearoder Rollenführung mit einem dritten Schlitten verschieblich gekoppelt ist, wobei der dritte Schlitten eine zweite Rollenschiene verschieblich aufnimmt, wobei sowohl sämtliche Schlitten als auch die Rollenschienen untereinander in ihrer Bewegung zwangsgekoppelt sind.

Die Zwangskopplung wird nach einem besonders vorteilhaften Merkmal dadurch verwirklicht, dass jeder Schlitten einen Riemen-, Ketten- oder Seiltrieb aufweist, der mit dem jeweils benachbarten Teleskopglied verbunden ist. Das bedeutet, dass der erste Schlitten einen ersten beispielsweise Riementrieb aufweist, an dem sowohl die erste Rollenschiene als auch der zweite Schlitten angelenkt sind. Der zweite Schlitten weist beispielsweise einen zweiten Riementrieb auf, an dem der erste und der dritte Schlitten angelenkt sind. Der dritte Schlitten wiederum besitzt einen dritten Riementrieb, der mit dem zweiten Schlitten und der zweiten Rollenschiene in Verbindung steht. Dadurch, dass jeder Schlitten und jede Rollenschiene durch mindestens einen Riemen mit zwei benachbarten Teleskopgliedern in Verbindung steht, wird die zuvor beschriebene Zwangskopplung der einzelnen Teleskopglieder untereinander verwirklicht. Die Anlenkung der einzelnen Teleskopglieder an dem Riemen-, Ketten- oder Seiltrieb ist derart getroffen, dass jedes der Teleskopglieder lediglich über die Hälfte seiner Länge teleskopierbar ist.

Im Einzelnen ist in Bezug auf die Anordnung der Schiebeelemente vorgesehen, dass die erste Rollenschiene an einem feststehenden Kabinenelement zum Beispiel einem Fensterelement angeordnet ist. Der zweite Schlitten und die zweite Rollenschiene weisen jeweils ein Schiebeelement, beispielsweise ebenfalls in Form eines Fensterelements auf. Dadurch wird erreicht, dass die die Schiebeelemente eine Tür bilden, die im zusammengeschobenen Zustand hinter dem feststehenden Kabinenelement Platz findet, und somit die nahezu vollständige Breite der Öffnung der Kabine zur Verfügung steht.

Es wurde bereits darauf hingewiesen, dass die einzelnen Schiebeelemente der Tür feststellbar sein sollen. In diesem Zusammenhang ist im Einzelnen vorgesehen, dass die teleskopierende Bewegung mindestens eines Teleskopgliedes durch eine Arretiereinrichtung feststellbar ist. Hierbei kann die Arretiereinrichtung mit mindestens einem Riemen-, Seil- oder einem Kettentrieb in Eingriff gebracht werden. Das heißt, wenn beispielsweise ein Riementrieb blockiert ist, dass dann aufgrund der Zwangskopplung, wie dies bereits näher erläutert worden ist, alle Schiebelemente des Teleskopauszugs in ihrer Bewegung blockiert sind.

Um der Tür die erforderliche Stabilität zu verleihen, ist nach einem weiteren Merkmal der Erfindung vorgesehen, dass die Schiebeelemente durch eine im Bereich der Decke angeordnete Führung verschieblich gehalten sind.

Nach einem weiteren Merkmal der Erfindung ist vorgesehen, dass die Tür um eine vertikale Achse verschwenkbar im Fahrzeug angeordnet ist. Es wurde bereits an anderer Stelle darauf hingewiesen, dass die Fahrerkabine über eine Rückwand verfügt, die sich hinter dem Sitz des Fahrers befindet. Diese Rückwand weist eine vertikale Rahmenleiste auf, wobei an dieser vertikalen Rahmenleiste über ein Scharnier oder Gelenk die teleskopierbare Tür verschwenkbar angeordnet ist. Dies hat zur Folge, dass die Tür in den Durchgang zum Bus eingeschwenkt werden kann. Dies vor folgendem Hintergrund: Wie bereits zu eingangs erläutert, sind die Busfahrer insbesondere in den späten Abendstunden häufig tätlichen Angriffen ausgesetzt. Ist die Fahrerkabine geschlossen, so kann zunächst dem Busfahrer nichts passieren, er kann aber auch nicht den Bus verlassen. Durch ein Verschwenken der Tür in den Durchgang wird nun für den Busfahrer die Möglichkeit eröffnet, den Bus durch die Fronttür zu verlassen, ohne dass ihm Fahrgäste folgen können, wenn auch die hintere Tür des Busses geschlossen ist. Um hierbei den Durchgang komplett zu verschließen, ist ebenfalls vorgesehen, den Kassentresen mit auszuschwenken, da die einzelnen die Teleskoptür bildenden Schiebelemente in ihrer vertikalen Erstreckung nur bis über den Kassentresen reichen. Dies um sicherzustellen, dass der Busfahrer mit den Passagieren kommunizieren kann, um gegebenenfalls auch bei geschlossener Tür z. B. Geld entgegen nehmen zu können. In diesem Zusammenhang ist insbesondere weiterhin vorgesehen, dass der Teleskopauszug mit ausschwenkt, was in gleicher Weise auch für die oben angeordnete Führung gilt, die die einzelnen Schiebeelemente hält.

Anhand der Zeichnungen wird die Erfindung nachstehend beispielhaft näher erläutert.
- Figur 1: zeigt die Fahrerschutzkabine in perspektivischer Darstellung bei geschlossener Tür;
- Figur 2: zeigt eine Darstellung gemäß Figur 1, bei der die einzelnen Schiebelemente sich hinter dem feststehenden Kabinenteil befinden;
- Figur 2a: zeigt die ausgezogene Tür im in den Gang des Fahrzeugs eingeschwenkten Zustand;
- Figur 2b: zeigt eine Darstellung gemäß Figur 2a im eingezogenen Zustand der Türelemente;
- Figur 3: zeigt die im Bereich der Decke angeordnete Führung für die einzelnen Schiebeelemente, wobei die Schiebeelemente im zusammengefahrenen Zustand dargestellt sind;
- Figur 4: zeigt eine Darstellung gemäß Figur 3 mit ausgezogenen Schiebeelementen;
- Figur 5: zeigt eine Ansicht von innen auf die Schiebeelemente, wobei der Teleskopauszug schematisch erkennbar ist;
- Figur 5a: zeigt die Anlenkung der Tür durch ein Scharnier an der Rückwand der Fahrerschutzkabine;
- Figur 5b: zeigt schematisch einen Schnitt gemäß der Linie Vb - Vb aus Figur 5a;
- Figur 6: zeigt den Teleskopauszug im ausgezogenen Zustand in einer Seitenansicht;
- Figur 6a: zeigt den Auszug gemäß Figur 6 im zusammengeschobenen Zustand;
- Figur 7: zeigt eine Darstellung gemäß der Linie VII-VII aus Figur 6;
- Figur 7a: zeigt eine Darstellung gemäß Figur 7 im zusammengeschobenen Zustand;
- Figur 8: zeigt eine Ansicht gemäß der Linie VIII-VIII aus Figur 6 im ausgezogenen Zustand;
- Figur 8a: zeigt eine Darstellung gemäß Figur 8 im zusammengeschobenen Zustand;
- Figur 9: zeigt eine Rückansicht der Darstellung gemäß Figur 6 im ausgezogenen Zustand;
- Figur 9a: zeigt die Darstellung gemäß Figur 9 im zusammengeschobenen Zustand.

Das Vorderteil 1 des Busses weist die insgesamt mit 10 bezeichnete Fahrerschutzkabine auf, wobei sich die Fahrerschutzkabine zum Einstieg 2 gegenüberliegend befindet. Die Fahrerschutzkabine umfasst eine Rückwand 11, die vom Boden bis zur Decke des Busses reicht. An der Rückwand 11 angelenkt befindet sich die insgesamt mit 20 bezeichnete Tür, wobei das feststehende Kabinenelement 15 Bestandteil der Tür ist. Das feststehende Kabinenelement 15 ist an der Rückwand 11 befestigt. Die Anbindung kann hierbei auch durch ein Scharnier erfolgen, sodass das feststehende Kabinenelement 15 in diesem Fall schwenkbar ausgebildet wäre. Oberhalb der Tür 20 befindet sich die mit 30 bezeichnete Führung, die im Bereich der Decke des Busses angelenkt ist.

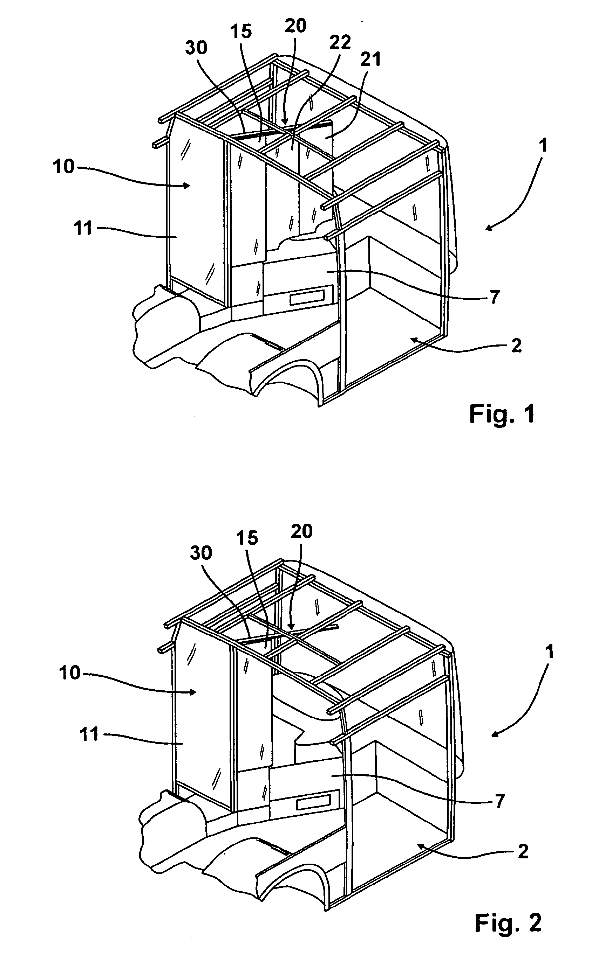

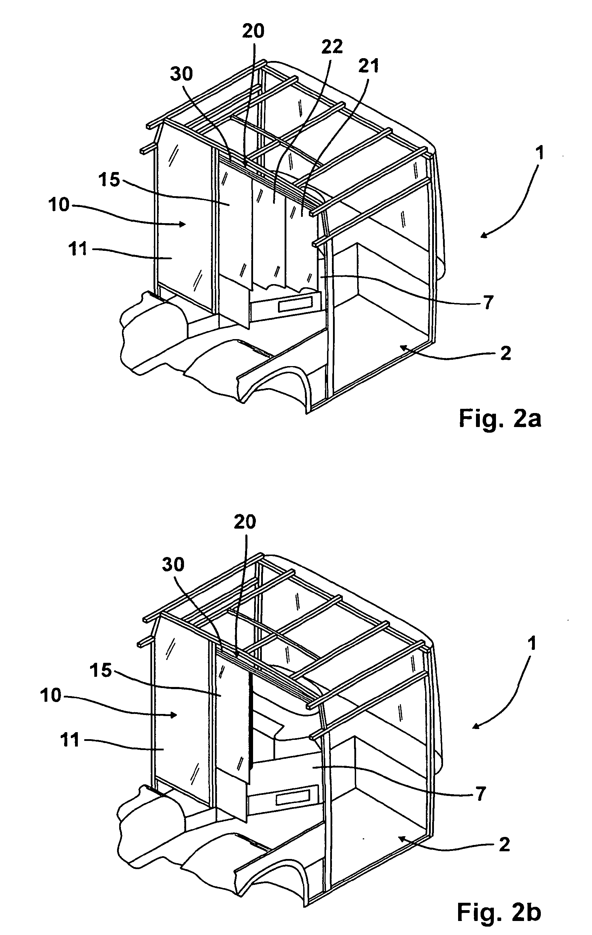

Aus Figur 2 ist erkennbar, dass die Tür 20, die die beiden Schiebeelemente 21 und 22 umfasst, vollständig geöffnet ist, wobei dann die beiden Schiebeelemente 21, 22 parallel zum feststehenden Kabinenelement 15 stehen. Der Fahrer ist dann in der Lage die Kabine zu verlassen und zwar dadurch, dass das Türelement 7 in Richtung auf die Türöffnung 2 ausgeschwenkt wird.

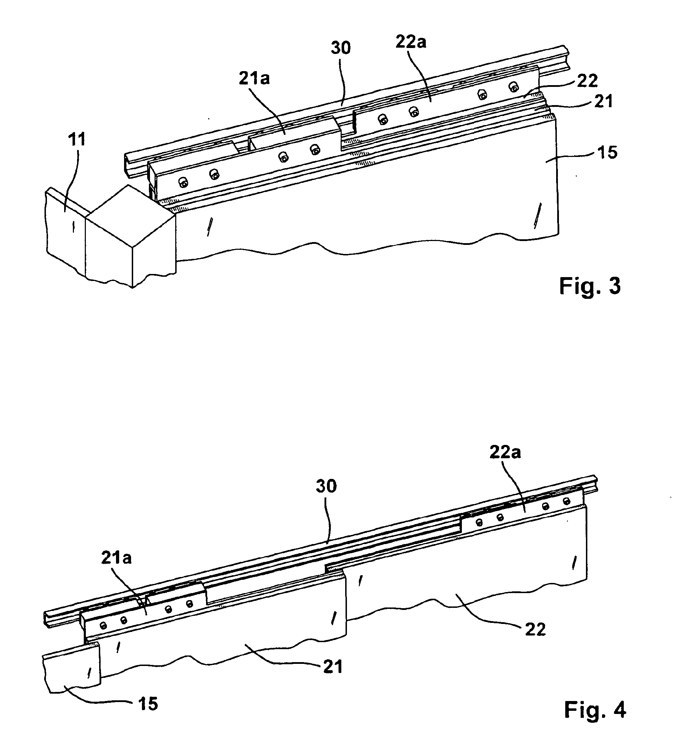

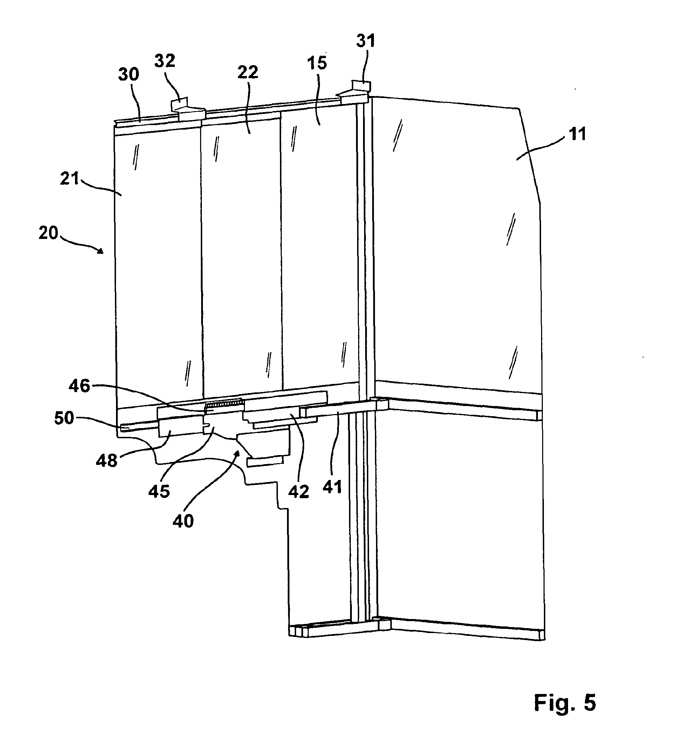

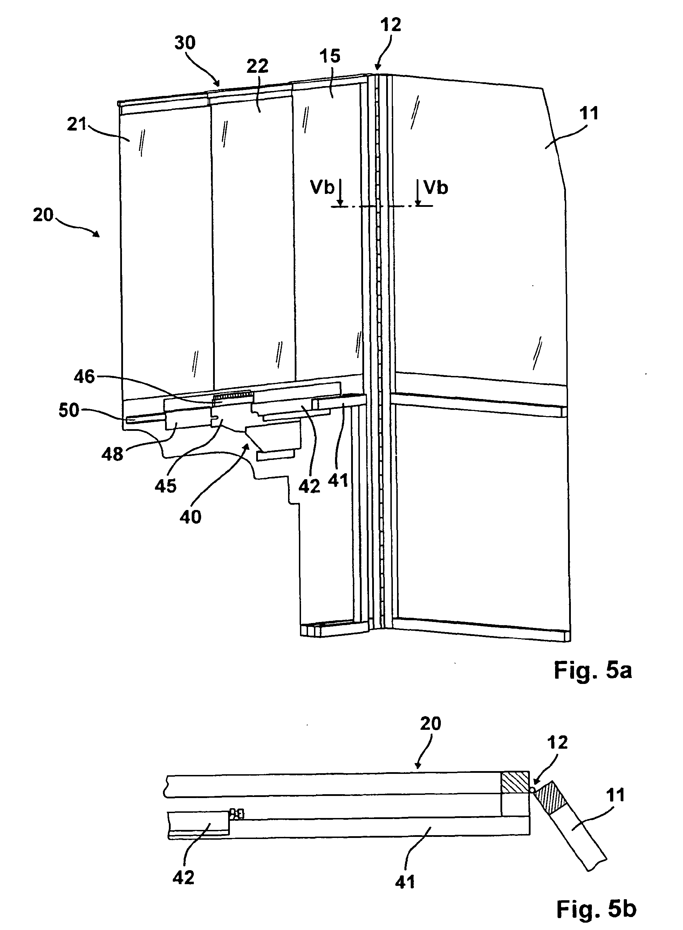

Die Führungsschiene 30 ist, wie sich dies aus der Darstellung gemäß Figur 5 ergibt, durch die beiden Befestigungswinkel 31 und 32 mit dem Fahrzeug verbunden, ohne dass dies näher beschrieben wird. Die Anlenkung der Schiebeelemente 21, 22 an der Führung 30 ist Gegenstand der Darstellungen gemäß den Figuren 3 und 4.

Die beiden Schiebelemente 21, 22 sind jeweils durch Rollenwagen 21 a, 22a in der Führungsschiene beweglich aufgenommen. Erkennbar ist insbesondere, dass die Rollenwagen 21 a, 22a derart an den Schiebeelementen 21, 22 angeordnet sind, dass sich die Rollenwagen nicht gegenseitig blockieren, sodass die einzelnen Schiebeelemente 21, 22 unmittelbar parallel zu dem feststehenden Kabinenelement 15 verfahren werden können, wie sich dies unmittelbar in Anschauung von Figur 3 ergibt.

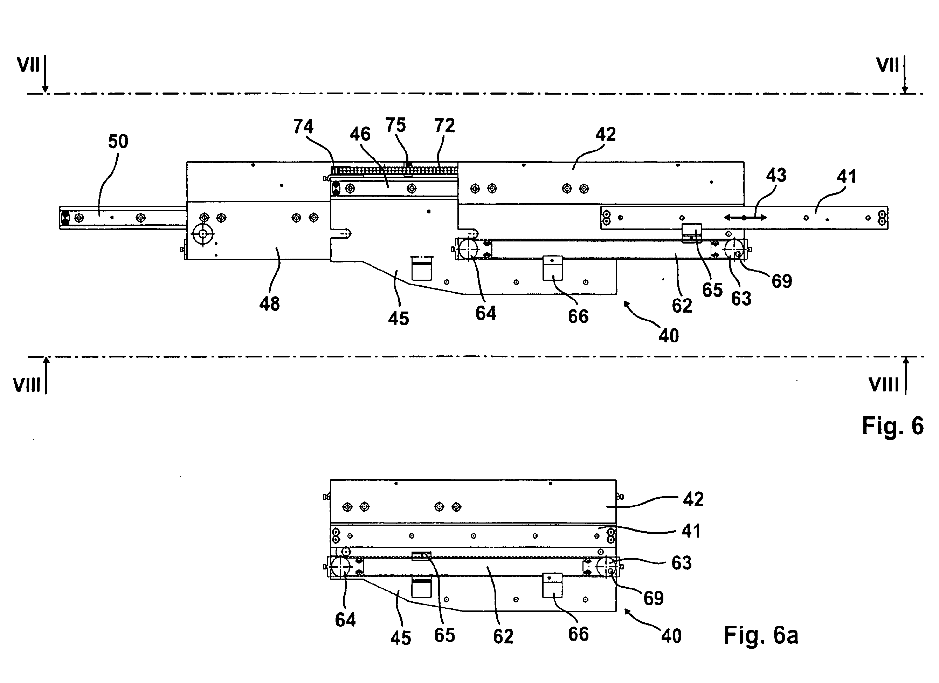

Betrachtet man nunmehr noch einmal Figur 5, so erkennt man dort den mit 40 bezeichneten Teleskopauszug. Der Teleskopauszug 40 ist an dem feststehenden Kabinenelement 15 angeordnet, und weist des Weiteren die beiden Schiebeelemente 21, 22 auf. Die Ausbildung des Teleskopauszugs 40 ist Gegenstand der Figuren 6 ff.

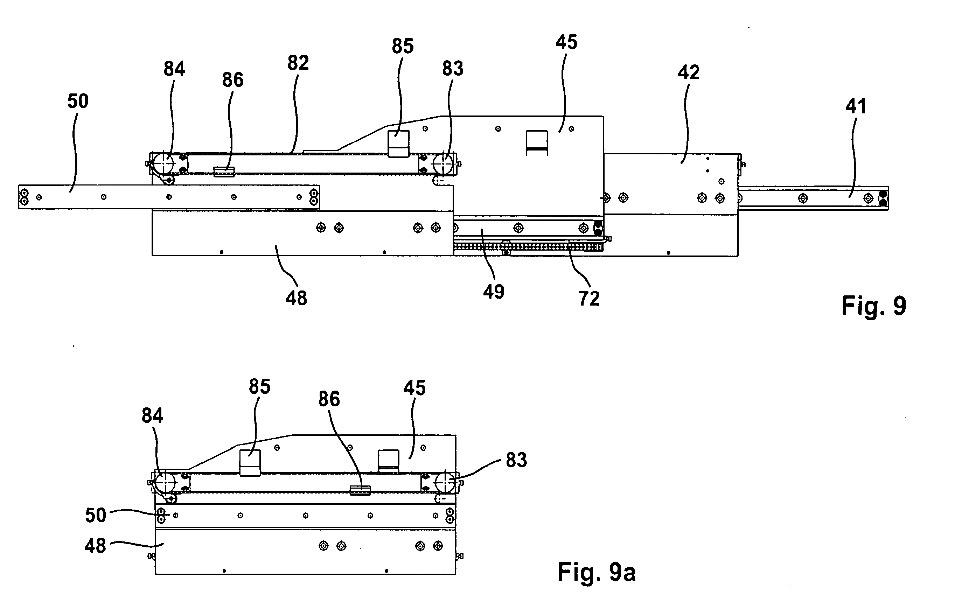

Betrachtet man nunmehr zunächst einmal die Figur 6, so erkennt man eine erste Rollenschiene 41, die auch als Linearführung zu bezeichnen ist. Die Rollenschiene 41 steht mit einem ersten Schlitten 42 in Verbindung, wobei die Rollenschiene 41 entsprechend dem Pfeil 43 verschieblich von dem Schlitten 42 aufgenommen ist. Der zweite Schlitten 45 ist wiederum über eine Rollenführung 46 an dem ersten Schlitten verschieblich gelagert. Ein dritter Schlitten 48 steht über eine weitere Rollenführung 49 und dem zweiten Schlitten in Verbindung (Figur 9.). An dem dritten Schlitten 48 ist verschieblich die zweite Rollenschiene 50 angelenkt. Die erste Rollenschiene dient zur Befestigung des Teleskopauszugs 40 an dem feststehenden Kabinenelement 15. Die Darstellung des Kabinenelementes 15 und auch der einzelnen Schiebeelemente 21, 22 in den Figuren 6 bis 9 ist der Übersichtlichkeit wegen weggelassen worden.

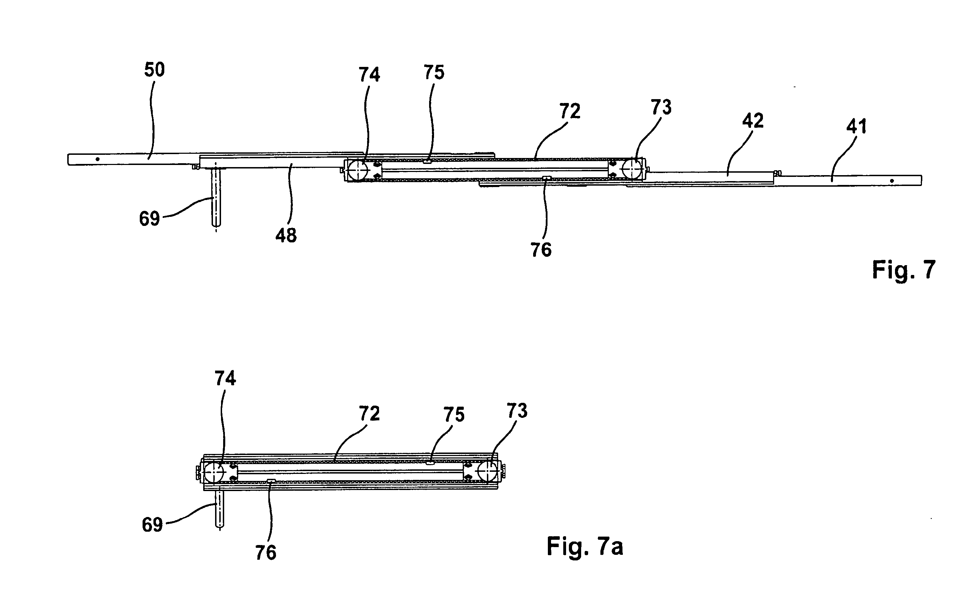

Im Folgenden soll nun die Zwangskopplung durch die drei Riementriebe beschrieben werden, die als Zahnriementriebe ausgebildet sind. Der erste Schlitten 42 zeigt den ersten Riementrieb 62, der durch die Umlenkrollen 63, 64 an dem ersten Schlitten 42 gehalten ist. Die erste Rollenschiene 41 ist durch einen Mitnehmer 65 mit dem ersten Riementrieb 62 verbunden, ein zweiter Mitnehmer 66 verbindet den ersten Riementrieb 62 mit dem zweiten Schlitten 45. Der zweite Riementrieb 72 ist durch die Umlenkrollen 73 und 74 an dem zweiten Schlitten 45 gelagert. Der zweite Riementrieb 72 steht zum einen durch den Mitnehmer 75 mit dem dritten Schlitten 48 in Verbindung und zum anderen durch den Mitnehmer 76 (Figur 7) mit dem ersten Schlitten 42. Der dritte Riementrieb 82 ergibt sich nun in Anschauung von Figur 9; dieser Riementrieb 82 steht durch den Mitnehmer 85 einerseits mit dem zweiten Schlitten 45 und andererseits über den Mitnehmer 86 mit der zweiten Rollenschiene 50 in Verbindung. Gehalten ist der dritte Riementrieb 82 durch die Umlenkrollen 83 und 84.

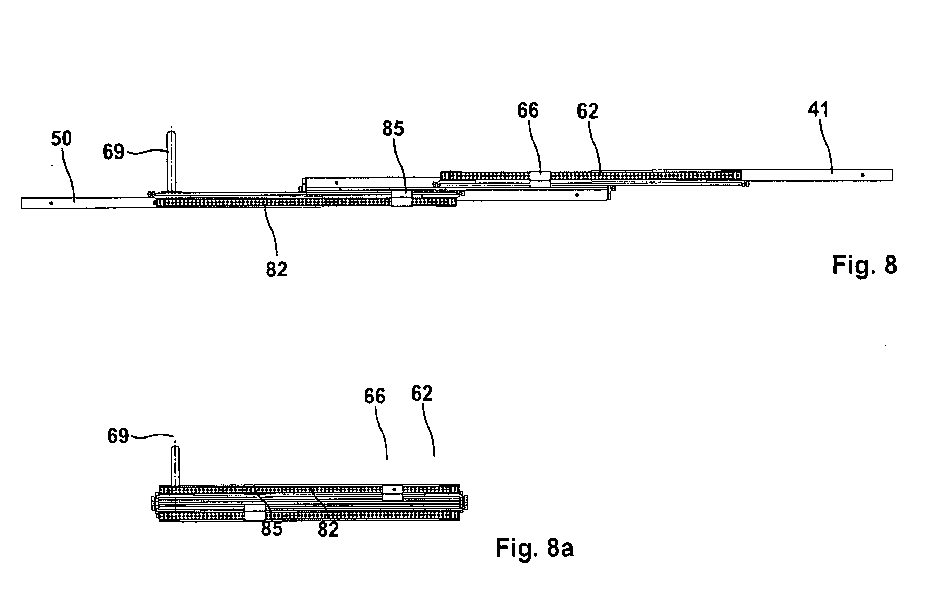

Wird nun einer der drei Riementriebe blockiert, dann ist der gesamte Teleskopauszug 40 blockiert. Dies geschieht im einfachsten Fall dadurch, dass beispielsweise die Rolle 84 in ihrer Drehbewegung blockiert wird, beispielsweise durch, dass ein Stift 69 durch die Rolle 84 bis in den Schlitten 42 gesteckt wird (Fig. 8, Fig. 9). Erkennbar ist ebenfalls, dass der zweite Schlitten immer genau die halbe Strecke der zweiten Rollenschiene 50 zurücklegt. Alle Elemente des Teleskopauszugs befinden sich immer in einer definierten Lage zueinander.

Die Darstellungen gemäß Figur 2a, 2b sowie 5a, 5b befassen sich mit der ausschwenkbaren Anordnung der Tür 20 an der Rückwand 11 der Fahrerschutzkabine. Wenn das mit 7 bezeichnete Türelement, das üblicherweise als Kassenelement ausgebildet ist, mit ausschwenkt, dann ist der Durchgang zum hinteren Teil des Busses im Wesentlichen vollständig verschlossen.

Aus den Figuren 5a, 5b ergibt sich im Einzelnen die gelenkige Anlenkung der Tür 20 an der Rückwand 11. Hierzu ist ein Scharnier 12 vorgesehen, das einerseits mit der Rückwand und andererseits mit der Tür 20 in Verbindung steht. Über das Scharnier ist auch der Teleskopauszug 40 gelenkig mit der Rückwand 11 verbunden.

### Bezugszeichenliste:

- 1: Vorderteil Bus
- 2: Türöffnung
- 7: Türelement
- 10: Fahrerschutzkabine
- 11: Rückwand
- 12: Scharnier
- 15: feststehendes Kabinenelement
- 20: Tür der Kabine
- 21: Schiebeelement
- 21 a: Rollenwagen
- 22: Schiebeelement
- 22a: Rollenwagen
- 30: Führung
- 31: Befestigungswinkel
- 32: Befestigungswinkel
- 40: Teleskopauszug
- 41: Rollenschiene
- 42: erster Schlitten
- 43: Pfeil
- 44: zweiter Schlitten
- 46: Rollenführung
- 48: dritter Schlitten
- 49: Rollenführung
- 50: Rollenschiene
- 62: erster Riementrieb
- 63: Umlenkrolle
- 64: Umlenkrolle
- 65: Mitnehmer
- 66: Mitnehmer
- 72: zweiter Riementrieb
- 73: Umlenkrolle
- 74: Umlenkrolle
- 75: Mitnehmer
- 76: Mitnehmer
- 82: dritter Riementrieb
- 83: Umlenkrollen
- 84: Umlenkrollen
- 85: Mitnehmer
- 86: Mitnehmer

## Patentansprüche

1. Fahrerschutzkabine (10) in einem Fahrzeug des öffentlichen Personentransportverkehrs, zum Beispiel einem Bus, wobei die Kabine (10) auf der dem Eingang (2) des Fahrzeuges zugewandten Seite eine Tür (20) aufweist, wobei die Tür mindestens ein Schiebeelement aufweist, das durch einen Teleskopauszug mit der Tür in Verbindung steht,
**dadurch gekennzeichnet,**
**dass** die Tür (20) versetzt zueinander mehrere Schiebeelemente (21, 22) aufweist, die durch einen Teleskopauszug (40) miteinander in Verbindung stehen, wobei der Teleskopauszug (40) mehrere Teleskopglieder (41, 42, 45, 48, 50) aufweist, wobei die einzelnen Teleskopglieder untereinander zwangsgekoppelt sind.

2. Fahrerschutzkabine nach Anspruch 1,
**dadurch gekennzeichnet,**
**dass** die einzelnen Schiebeelemente (21, 22) als Fensterelemente ausgebildet sind.

3. Fahrerschutzkabine nach einem der voranstehenden Ansprüche,
**dadurch gekennzeichnet,**
**dass** die Schiebeelemente (21, 22) aus der Ebene heraus versetzt zueinander durch den Teleskopauszug (40) miteinander in Verbindung stehen.

4. Fahrerschutzkabine nach einem der voranstehenden Ansprüche,
**dadurch gekennzeichnet,**
**dass** die Zwangskopplung durch mehrere die einzelnen Teleskopglieder (41, 42, 45, 48, 50) verbindende Riemen-, Ketten- oder Seiltriebe erfolgt.

5. Fahrerschutzkabine nach einem der voranstehenden Ansprüche,
**dadurch gekennzeichnet,**
**dass** der Teleskopauszug (40) mindestens zwei Rollenschienen (41, 50) aufweist, die durch mehrere Schlitten (42, 45, 48) miteinander in Verbindung stehen, wobei die Schlitten relativ zueinander verschieblich miteinander verbunden sind.

6. Fahrerschutzkabine nach einem der voranstehenden Ansprüche,
**dadurch gekennzeichnet,**
**dass** drei Schlitten (42, 45, 48) vorgesehen sind, die durch Linear- oder Rollenführungen (46, 49) relativ zueinander verschieblich miteinander in Verbindung stehen.

7. Fahrerschutzkabine nach einem der voranstehenden Ansprüche,
**dadurch gekennzeichnet,**
**dass** der Teleskopauszug (40) eine erste Rollenschiene (41) umfasst, die mit einem ersten Schlitten (42) verschieblich in Verbindung steht, wobei der erste Schlitten (42) durch eine Linear- oder Rollenführung (46) mit einem zweiten Schlitten (45) verschieblich gekoppelt ist, wobei der zweite Schlitten (45) durch eine Linear- oder Rollenführung (49) mit einem dritten Schlitten (48) verschieblich gekoppelt ist, wobei der dritten Schlitten (48) eine zweite Rollenschiene (50) verschieblich aufnimmt, wobei sowohl die Schlitten als auch die Rollenschienen untereinander in ihrer Bewegung zwangsgekoppelt sind.

8. Fahrerschutzkabine nach Anspruch 7,
**dadurch gekennzeichnet,**
**dass** die erste Rollenschiene (41) an einem feststehenden Kabinenelement (15) angeordnet ist.

9. Fahrerschutzkabine nach Anspruch 7,
**dadurch gekennzeichnet,**
**dass** der zweite Schlitten (45) und die zweite Rollenschiene (50) jeweils ein Schiebeelement (21, 22) aufweisen.

10. Fahrerschutzkabine nach einem der voranstehenden Ansprüche,
**dadurch gekennzeichnet,**
**dass** jeder Schlitten (42, 45, 48) einen Riemen-, Ketten- oder Seiltrieb (62, 72, 82) aufweist, der mit dem jeweils benachbarten Teleskopglied (41, 42, 45, 48, 50) verbunden ist.

11. Fahrerschutzkabine nach einem der voranstehenden Ansprüche,
**dadurch gekennzeichnet,**
**dass** die teleskopierende Bewegung mindestens eines Teleskopgliedes (41, 42, 45, 48, 50) durch eine Arretiereinrichtung (69) feststellbar ist.

12. Fahrerschutzkabine nach Anspruch 11,
**dadurch gekennzeichnet,**
**dass** die Arretiereinrichtung (69) mit mindestens einem Riemen-, Kettenoder Seiltrieb (62, 72, 82) in Eingriff bringbar ist.

13. Fahrerschutzkabine nach einem der voranstehenden Ansprüche,
**dadurch gekennzeichnet,**
**dass** die einzelnen Teleskopglieder (41, 42, 45, 48, 50) durch die Riemen-, Ketten- oder Seiltriebe (62, 72, 82) derart miteinander verbunden sind, dass jedes Teleskopglied lediglich über die Hälfte seiner Länge teleskopierbar ist.

14. Fahrerschutzkabine nach einem der voranstehenden Ansprüche,
**dadurch gekennzeichnet,**
**dass** die Schiebeelemente (21, 22) durch einen im Bereich der Decke des Busses angeordnete Führung (30) verschieblich gehalten sind.

15. Fahrerschutzkabine nach einem der voranstehenden Ansprüche,
**dadurch gekennzeichnet,**
**dass** die Tür (20) um ein vertikales Scharnier (12) verschwenkbar im Fahrzeug angeordnet ist.

16. Fahrerschutzkabine nach einem der voranstehenden Ansprüche,
**dadurch gekennzeichnet,**
**dass** die Führung (30) ebenfalls mit der Tür (20) verschwenkbar ist.

17. Fahrerschutzkabine nach einem der voranstehenden Ansprüche,
**dadurch gekennzeichnet,**
**dass** die Fahrerschutzkabine (10) eine feststehende Rückwand (11) umfasst, an der die Tür (20) um das vertikale Scharnier (12) schwenkbar angelenkt ist.

## Claims

1. A driver protection cabin (1) in a public transport vehicle, for instance a bus, the cabin (10) having a door (20) on the side facing the entrance (2) of the vehicle, the door having at least one sliding element that is connected to the door by way of a telescopic pull-out,
**characterized in that**
the door (20) has several sliding elements (21, 22), offset relative to each other, which are connected to each other by way of a telescopic pull-out (40), the telescopic pull-out (40) comprising several telescopic members (41, 42, 45, 48, 50), the individual telescopic members being forcibly coupled to each other.

2. The driver protection cabin according to claim 1,
**characterized in that**
the individual sliding elements (21, 22) are configured as window elements.

3. The driver protection cabin according to one of the afore-mentioned claims,
**characterized in that**
the sliding elements (21, 22) are connected to each other by way of the telescopic pull-out (40) in an offset position relative to each other with respect to the plane.

4. The driver protection cabin according to one of the afore-mentioned claims,
**characterized in that**
the forced coupling occurs by way of several belt, chain or rope drives connecting the individual telescopic members (41, 42, 45, 48, 50).

5. The driver protection cabin according to one of the afore-mentioned claims,
**characterized in that**
the telescopic pull-out (40) has at least two roller rails (41, 50) which are connected to each other by way of several slides (42, 45, 48), the slides being connected to each other so as to be moveable relative to each other.

6. The driver protection cabin according to one of the afore-mentioned claims,
**characterized in that**
three slides (42, 45, 48) are provided, which are connected to each other by linear or roller guides (46, 49) so as to be moveable relative to each other.

7. The driver protection cabin according to one of the afore-mentioned claims,
**characterized in that**
the telescopic pull-out (40) comprises a first roller rail (41), which is moveably connected with a first slide (42), the first slide (42) being moveably coupled with a second slide (45) by way of a linear or roller guide (46), the second slide (45) being moveably coupled with a third slide (48) by way of a linear or roller guide (49), the third slide (48) moveably receiving a second roller rail (50), the slides as well as the roller rails being forcibly coupled to each other for motion.

8. The driver protection cabin according to claim 7,
**characterized in that**
the first roller rail (41) is disposed on a static cabin element (15).

9. The driver protection cabin according to claim 7,
**characterized in that**
the second slide (45) and the second roller rail (50) each have a sliding element (21, 22).

10. The driver protection cabin according to one of the afore-mentioned claims,
**characterized in that**
each slide (42, 45, 48) has a belt, chain or rope drive (62, 72, 82), which is connected with the respectively adjacent telescopic member (41, 42, 45, 48, 50).

11. The driver protection cabin according to one of the afore-mentioned claims,
**characterized in that**
the telescopic motion of at least one telescopic member (41, 42, 45, 48, 50) is lockable by means of a locking mechanism (69).

12. The driver protection cabin according to claim 11,
**characterized in that**
the locking mechanism (69) is engageable with at least one belt, chain or rope drive (62, 72, 82).

13. The driver protection cabin according to one of the afore-mentioned claims,
**characterized in that**
the individual telescopic members (41, 42, 45, 48, 50) are connected to each other by the belt, chain or rope drives (62, 72, 82) in such a manner that each telescopic member is telescopable over merely half its length.

14. The driver protection cabin according to one of the afore-mentioned claims,
**characterized in that**
the sliding elements (21, 22) are moveably held by a guide (30) disposed in the area of the ceiling of the bus.

15. The driver protection cabin according to one of the afore-mentioned claims,
**characterized in that**
the door (20) is disposed in the vehicle so as to be pivotable about a vertical hinge (12).

16. The driver protection cabin according to one of the afore-mentioned claims,
**characterized in that**
the guide (30) is also pivotable together with door (20).

17. The driver protection cabin according to one of the afore-mentioned claims,
**characterized in that**
the driver protection cabin (10) comprises a static back wall (11) to which the door (20) is articulated so as to be pivotable about the vertical hinge (12).

## Revendications

1. Cabine de protection de conducteur (10) dans un véhicule de transport en commun, par exemple un bus, la cabine (10) comportant une porte (20) du coté orienté vers l'entrée (2) du véhicule, la porte comprenant au moins un élément coulissant qui est couplé avec la porte au moyen d'une pièce extensible téléscopiquement,
**caractérisée en ce,**
**que** la porte (20) comporte plusieurs éléments coulissants (21, 22) décalés les uns par rapport aux autres qui sont couplés au moyen d'une pièce extensible téléscopiquement (40), la pièce extensible téléscopiquement (40) comprenant plusieurs segments télescopiques (41, 42, 45, 48, 50), ces segments individuels étant liés entre eux par couplage forcé.

2. Cabine de protection de conducteur selon la revendication 1, **caractérisée en ce que** les éléments coulissants individuels (21, 22) sont constitués d'éléments de fenêtre.

3. Cabine de protection de conducteur selon l'une des revendications précédentes, **caractérisée en ce que** les éléments coulissants (21, 22) sont décalés par rapport à un plan et couplés entre eux au moyen de la pièce extensible téléscopiquement (40).

4. Cabine de protection de conducteur selon l'une des revendications précédentes, **caractérisée en ce que** le couplage forcé des segments individuels (41, 42, 45, 48, 50) est effectué au moyen d'une liaison par courroies, chaînes ou câbles d'entraînement.

5. Cabine de protection de conducteur selon l'une des revendications précédentes, **caractérisée en ce que** la pièce extensible télescopiquement (40) comporte au moins deux rails de roulement (41, 50) qui sont liés entre eux par plusieurs patins (42, 45, 48), les patins étant liés entre eux de façon coulissante relativement les uns par rapport aux autres.

6. Cabine de protection de conducteur selon l'une des revendications précédentes, **caractérisée en ce qu'**elle comporte trois patins (42, 45, 48) qui sont couplés entre eux de façon coulissante relativement les uns par rapport aux autres, au moyen de guidages linéaires ou de guidages à galets (46, 49).

7. Cabine de protection de conducteur selon l'une des revendications précédentes, **caractérisée en ce que** la pièce extensible téléscopiquement (40) comprend un premier rail de roulement (41) qui est lié à un premier patin (42) coulissant, le premier patin (42) étant couplé avec un deuxième patin (45) coulissant au moyen d'un guidage linéaire ou d'un guidage à galets (46), le deuxième patin (45) étant lié à un troisième patin (48) coulissant au moyen d'un guidage linéaire ou d'un guidage à galets (49), le troisième patin (48) étant pourvu d'un deuxième rail de roulement (50) mobile en translation, les patins ainsi que les rails de roulement étant liés entre eux par couplage forcé.

8. Cabine de protection de conducteur selon la revendication 7, **caractérisée en ce que** le premier rail de roulement (41) est monté sur un élément de cabine fixe (15).

9. Cabine de protection de conducteur selon la revendication 7, **caractérisée en ce que** deuxième patin (45) et le deuxième rail de roulement (50) comportent chacun respectivement un élément coulissant (21, 22).

10. Cabine de protection de conducteur selon l'une des revendications précédentes, **caractérisée en ce que** chaque patin (42, 45, 48) comporte un entraînement à courroies, à chaînes ou à câbles d'entraînement (62, 72, 82) qui est connecté respectivement au segment télescopique voisin (41, 42, 45, 48, 50).

11. Cabine de protection de conducteur selon l'une des revendications précédentes, **caractérisée en ce que** le mouvement télescopique d'au moins un des segments télescopiques (41, 42, 45, 48, 50) est réglable au moyen d'un dispositif d'arrêt (69).

12. Cabine de protection de conducteur selon la revendication 11, **caractérisée en ce que** le dispositif d'arrêt (69) est mis en prise à l'aide d'au moins un entraînement à courroies, à chaînes ou à câbles d'entraînement (62, 72, 82).

13. Cabine de protection de conducteur selon l'une des revendications précédentes, **caractérisée en ce que** les segments télescopiques individuels (41, 42, 45, 48, 50) sont liés avec les entraînements à courroies, à chaînes ou à câbles d'entraînement (62, 72, 82) de telle manière que chaque segment télescopique est extensible téléscopiquement sur la moitié de sa longueur.

14. Cabine de protection de conducteur selon l'une des revendications précédentes, **caractérisée en ce que** les éléments coulissants (21, 22) sont mobiles le long d'un guide (30) disposé dans l'espace délimité par le toit du bus.

15. Cabine de protection de conducteur selon l'une des revendications précédentes, **caractérisée en ce que** la porte (20) est articulée sur une charnière verticale (12) montée à l'intérieur du véhicule.

16. Cabine de protection de conducteur selon l'une des revendications précédentes, **caractérisée en ce que** le guide (30) est également articulé avec la porte (20).

17. Cabine de protection de conducteur selon l'une des revendications précédentes, **caractérisée en ce que** la cabine de protection du conducteur comporte une paroi arrière fixe (11) sur laquelle la porte (20) est articulée autour de la charnière verticale (12).
